# EUROPEAN PATENT SPECIFICATION

(11) **EP 3 977 486 B1**
(45) Date of publication and mention of the grant of the patent: **26.07.2023**
(21) Application number: 20726061.3
(22) Date of filing: 13.05.2020
(51) Int. Cl.: G21C 9/00, G21C 13/02, G21C 13/024

(54) **PRESSURE-CONTAINING SILO FOR A PRESSURISED WATER REACTOR NUCLEAR POWER PLANT**
DRUCKHALTIGER SILO FÜR EINEN DRUCKWASSERREAKTOR-KERNKRAFTWERK
SILO SOUS PRESSION POUR CENTRALE NUCLÉAIRE À RÉACTEUR À EAU SOUS PRESSION

(30) Priority: 24.05.2019 GB 201907379
(43) Date of publication of application: 06.04.2022
(73) Proprietor: Rolls-Royce SMR Limited, Derby DE24 8BJ (GB)
(72) Inventor: ROBERTSON, Daniel, Derby Derbyshire DE24 8BJ (GB)
(74) Representative: Mewburn Ellis LLP
(86) International application number: PCT/EP2020/063267
(87) International publication number: WO 2020/239441

(56) References cited:
- CN-A- 108 630 326
- US-A- 3 185 631
- US-A1- 2016 276 046

## Description

### Field of the Disclosure

The present disclosure relates to the field of nuclear reactor power plants. In particular, the present invention relates to a pressure-containing silo for a reactor nuclear power plant.

### Background

Nuclear power plants convert heat energy from the nuclear decay of fissile material contained in fuel assemblies into electrical energy. One exemplary type of nuclear power plant is a pressurised water reactor (PWR) nuclear power plant. PWR nuclear power plants have a primary coolant circuit which typically connects at least the following pressurised components: a reactor pressure vessel (RPV) containing the fuel assemblies; one or more steam generators; and one or more pressurisers. Coolant pumps in the primary circuit circulate pressurised water through pipework between these components. The RPV houses the nuclear reactor which heats the water in the primary circuit. The steam generator functions as a heat exchanger between the primary circuit and a secondary system where steam is generated to power turbines. The pressuriser typically maintains a pressure of around 155 bar in the primary circuit.

The aforementioned components and the primary circuit are located within an airtight containment structure which is designed to retain the primary circuit water and also any radioactive release in the event any of the components and/or the pipework of the primary circuit are compromised.

A conventional containment structure has an upright cylindrical shape with a hemispherical roof and encloses all of the pressurised components on the primary circuit. Containment structures for nuclear power plants with an output of 300-1000 MWe may have a diameter in the region of 20-35 m, which is considerably greater than the diameter of the RPV. The large size of conventional containment structures has a number of drawbacks.

For example, in the event of a loss-of-coolant accident, flash steam may be formed as highpressure water leaks from the primary circuit into the containment structure. The steam continues to form until a pressure equilibrium is reached between the primary circuit and the pressure in the containment structure. However, the equilibrium pressure reached in the containment structure in a loss-of-coolant accident is typically around 4-5 bar, which is a substantially lower than the pressure of the water in the primary circuit. Consequently, a large amount of water leaks from the primary circuit before equilibrium is reached. This can cause the water level in the RPV to drop so that the fuel assemblies of the nuclear reactor are partially or completely uncovered, which thus necessitates the pumping of additional compensatory water into the RPV in order to prevent damage to the reactor or even a meltdown.

Another drawback of conventional containment structures is that they have a long construction lead time. Conventional containment structures are constructed from steel or post tensioned concrete and therefore require the use of significant formwork and scaffolding, as well as site-poured reinforced concrete and site-welded plate steel. Additionally, the construction process is highly dependent on numerous factors, making it vulnerable to delay and cost overruns. Furthermore, re-work can impose significant costs and delays.

CN108630326A suggests a silo having a steel-composite structure.

A need exists for a nuclear power plant containment structure which addresses one or more of these drawbacks.

### Summary of the disclosure

According to a first aspect there is provided a pressure-containing silo as set forth in claim 1.

Advantageously, the concrete bodies of the modular units may be cast from moulds, which facilitates their manufacture on standardized production lines either on site or off site in controlled factory settings. The metal liners can be cast-in as part of such a moulding process. The metal liners may be formed from stainless steel or from other suitable corrosion and temperature-resistant metallic material. The stacking and joining of the modular units can also reduce the amount of rework which is required on site.

Another advantage is that the modular units can reduce overall construction times because they facilitate parallel construction of plural silos.

Yet another advantage is that the modular units may be sized so that they may be transported from a manufacturing location to site by conventional means such as road, rail, water or air.

Optional features of the first aspect will now be set out.

The pressure containing silo may be a close-fitting pressure containing silo. In embodiments, the close-fitting silo may have a diameter between 4 and 12 metres; or between 5 and 9 metres; or between 5 and 7 metres, or a range formed from any of the preceding endpoints. In embodiments, a close-fitting silo may be considered as a silo with a diameter between 0.2 m and 4 m larger than the diameter of the component it houses, or between 0.5 m and 2 m larger or between 1 m or 1.5 m larger, or a range of any of the preceding endpoints. In embodiments, a close-fitting pressure containing silo may be considered as a silo configured to contain pressures between 10 and 130 bar; or between 30 and 90 bar, or between 40 and 50 bar; or a range of any of the preceding end points.

Conveniently, each modular unit may further have alignment fixtures which engage with corresponding alignment fixtures of neighbouring units to ensure that the units, when stacked, are correctly located relative to each other. This may improve stacking accuracy and also may increase the rate at which modular units may be stacked together. Further it facilitates modifications to positioning to account for local conditions and settling. The alignment fixtures may take the form of corresponding male and female parts such as grooves and recesses, matching crenulations, or corresponding cone-shaped projections and recesses.

Conveniently each modular unit may further have alignment markings which align to corresponding alignment markings of neighbouring units to ensure that the units, when stacked, are correctly located relative to each other.

The release space may be a cylindrical space. Such a shape is not only compatible with the pressure-retaining function of the silo but matches the generally cylindrical envelope of components such as an RPV, steam generator or pressuriser, and thus can help to reduce the volume of the release space. This in turn improves safety as a greater volume of water is retained in the primary circuit in the event of a loss of coolant accident. A close-fitting containment is also difficult to build using conventional concrete forming methods. The modular units of the present invention improve the ease of construction of a close-fitting containment, thereby reducing complexity, time and cost of construction.

Conveniently, even when the release space is a cylindrical space, the outer surface of the silo may have a (e.g. rectangular or hexagonal) prismatic shape. This facilitates the stacking together of adjacent silos without spaces being formed therebetween. The outer surface of the silo may be formed by faces of the concrete bodies.

Conveniently, when the release space is a cylindrical space, two of the orthogonal directions may be perpendicular to the cylinder axis and the third orthogonal directions may be parallel to the cylinder axis.

Conveniently, when the release space is a cylindrical space, the space may extend vertically, and may be capped at its upper end by a domed head. Such a domed head may be removably secured to the silo by bolting at the ends of elongate tensioning members which extend parallel to the cylinder axis. Alternatively, the release space may extend horizontally.

In use, the domed head may be removable by a crane located externally to the silo. This means the silo does not need to have increased height to accommodate a crane.

Optionally, a component which is contained within a pressure-containing silo may be fixed to the domed head to allow convenient insertion and removal of the component from the release space of the pressure-containing silo. If a pressure-containing silo contains plural components, then the components may be fixed to one another to allow convenient insertion and removal of the components from the release space of the pressure-containing silo.

When the release space is a cylindrical space, each modular unit may extend circumferentially around the release space by at least 60°. For example, each modular unit may extend circumferentially around the release space by 90° or 180° for compatibility with a rectangular prismatic shape for the outer surface of the silo, or by 60°, 120° or 180° for compatibility with a hexagonal prismatic shape for the outer surface of the silo.

The metal liners may be sealed edge-to-edge by welding, brazing, gaskets and/or mechanical fasteners.

Grouting may be inserted between faces of neighbouring modular units when the units are stacked. In this case, the modular units may have integral retention formations to shutter the inserted grouting.

The pressure-containing silo may contain the one or more components on the primary coolant circuit of the pressurised water nuclear reactor. For example, the pressure-containing silo may contain one of: an RPV, a steam generator, or a pressuriser.

The pressure-containing silo may also closely fit to the component to be contained within the silo, whereby the shape of bottom of the silo matches the base of the component. For example, if the component is the RPV with a hemispherical base, the bottom of the silo may also be hemispherical. The distance between the bottom of the silo and the base of the component may be between 0.1 m and 2 m larger than the diameter of the component it houses, or between 0.25 m and 1 m larger or between 0.5 m or 0.75 m larger, or a range of any of the preceding endpoints. This may reduce the volume of water of coolant leaked from the primary circuit that is required to cover the component.

The vessel diameter may be reduced at the bottom at the bottom to match reduced diameter elements such as reactor coolant pumps or reactor coolant pipes. Alternatively, the diameter of the silo may be reduced below component access hatches, compared to the diameter above the access hatches. Thus, the silo may be wider to an access hatch, then narrower thereafter. The distance between the wall of the silo to the component in a narrower region may be approximately half of the corresponding distance of a wider region. Alternatively, the distance may be between 0.1 m and 2 m; or between 0.25 m and 1 m; or between 0.3 m or 0.75 m larger

According to a second aspect there is provided an array of plural of the pressure-containing silos of the first aspect, each silo being for containing respective components (e.g. an RPV, a steam generator or a pressuriser) on the primary coolant circuit of the PWR nuclear power plant, wherein components in neighbouring silos are connected by pipework of the primary coolant circuit to transfer the pressurised coolant water therebetween, the neighbouring silos having aligned apertures formed in selected of the modular units through which apertures the connecting pipework extends.

Optional features of the second aspect will now be set out.

Conveniently, the array may be arranged such that the neighbouring silos are in close contact such that the entire length of the connecting pipework between the release spaces of neighbouring silos is surrounded by the concrete bodies of the selected modular units of those neighbouring silos. In this way, the entire primary coolant circuit can be contained using only the silos, such that a further airtight containment structure surrounding the silos is not needed.

In examples of the array, a first one of the silos can be for containing a reactor pressure vessel of the PWR nuclear power plant, and a second one of the silos can be for containing a steam generator of the PWR nuclear power plant, in use the steam generator receiving pressurised coolant water from the nuclear reactor, extracting heat therefrom to generate steam for use in power generation, and returning the pressurised coolant water to the nuclear reactor; wherein the reactor pressure vessel is confined by and positioned within the first silo such that, in the event of the loss-of-coolant accident of the reactor pressure vessel, nuclear fuel elements within the nuclear reactor remain fully covered by the coolant water when the steam pressure within the release space of the first silo reaches an equilibrium level limiting further steam formation; wherein the steam generator is confined by the second silo such that, in the event of the loss-of-coolant accident of the steam generator, the nuclear fuel elements within the nuclear reactor remain fully covered by the coolant water when the steam pressure within the release space of the second silo reaches an equilibrium level limiting further steam formation; and wherein the release spaces of the first and second silos are isolated from each other such that the increasing pressure from the contained steam in either release space is not communicated to the other release space.

In these examples, the array may have further silos for containing respective further components, such as one or more further steam generator and/or a pressuriser. Each further component may be confined by its silo such that, in the event of a loss-of-coolant accident of the component, the nuclear fuel elements within the nuclear reactor remain fully covered by the coolant water when the steam pressure within the release space of the further silo reaches an equilibrium level limiting further steam formation. Further, the release space of each further silo can be isolated from the other silos such that the increasing pressure from the contained steam in its release space is not communicated to the other release spaces, and vice versa.

The pressure-containing silos may conveniently be identical in size. Alternatively, the pressure-containing silos may be sized differently from one another.

According to a third aspect there is provided a PWR nuclear power plant having a reactor pressure vessel containing fuel assemblies which are cooled by pressurised coolant water circulating around a primary coolant circuit, components (e.g. the RPV, one or more steam generators and a pressuriser) of the power plant on the primary coolant circuit being contained in respective silos of the array of the second aspect.

According to a fourth aspect there is provided a kit of the modular units for forming the pressure-containing silo of the first aspect. Thus, the units of the kit are stackable and joinable to form the silo.

In a fifth aspect these is a method of manufacture of a pressure-containing silo as set forth in claim 17.

In embodiments, the joining of the units may comprise joining the metal liners edge-to-edge by welding, brazing, gaskets and/or mechanical fasteners. In embodiments, joining the units may comprise inserting grouting between faces of neighbouring modular units. In embodiments, grouting may be retained by integral retention formations on the modular units. In embodiments, a number of modular units may be joined together before being stacked to form the silo.

The present invention is described herein with reference to a pressurized water reactor, however it is applicable to any reactor comprising a pressurized coolant circulated in a primary circuit. Including, for example reactors utilizing a water coolant (including boiling water reactors), borated water, liquid metal or salt.

The nuclear reactor power plant may have a power output between 250 and 600 MW or between 300 and 550 MW.

The nuclear reactor power plant may be a modular reactor. A modular reactor may be considered as a reactor comprised of a number of modules that are manufactured off site (e.g. in a factory) and then the modules are assembled into a nuclear reactor power plant on site by connecting the modules together. Any of the primary, secondary and/or tertiary circuits may be formed in a modular construction.

The nuclear reactor of the present disclosure may comprise a primary circuit comprising a reactor pressure vessel; one or more steam generators and one or more pressurizer. The primary circuit circulates a medium (e.g. water) through the reactor pressure vessel to extract heat generated by nuclear fission in the core, the heat is then to delivered to the steam generators and transferred to the secondary circuit. The primary circuit may comprise between one and six steam generators; or between two and four steam generators; or may comprise three steam generators; or a range of any of the aforesaid numerical values. The primary circuit may comprise one; two; or more than two pressurizers. The primary circuit may comprise a circuit extending from the reactor pressure vessel to each of the steam generators, the circuits may carry hot medium to the steam generator from the reactor pressure vessel, and carry cooled medium from the steam generators back to the reactor pressure vessel. The medium may be circulated by one or more pumps. In some embodiments, the primary circuit may comprise one or two pumps per steam generator in the primary circuit.

In some embodiments, the medium circulated in the primary circuit may comprise water. In some embodiments, the medium may comprise a neutron absorbing substance added to the medium (e.g., boron, gadolinium). In some embodiments the pressure in the primary circuit may be at least 50, 80 100 or 150 bar during full power operations, and pressure may reach 80, 100, 150 or 180 bar during full power operations. In some embodiments, where water is the medium of the primary circuit, the heated water temperature of water leaving the reactor pressure vessel may be between 540 and 670 K, or between 560 and 650 K, or between 580 and 630 K during full power operations. In some embodiments, where water is the medium of the primary circuit, the cooled water temperature of water returning to the reactor pressure vessel may be between 510 and 600k, or between 530 and 580 K during full power operations.

The nuclear reactor of the present disclosure may comprise a secondary circuit comprising circulating loops of water which extract heat from the primary circuit in the steam generators to convert water to steam to drive turbines. In embodiments, the secondary loop may comprise one or two high pressure turbines and one or two low pressure turbines.

The secondary circuit may comprise a heat exchanger to condense steam to water as it is returned to the steam generator. The heat exchanger may be connected to a tertiary loop which may comprise a large body of water to act as a heat sink.

The reactor vessel may comprise a steel pressure vessel, the pressure vessel may be from 5 to 15 m high, or from 9.5 to 11.5 m high and the diameter may be between 2 and 7 m, or between 3 and 6 m, or between 4 to 5 m. The pressure vessel may comprise a reactor body and a reactor head positioned vertically above the reactor body. The reactor head may be connected to the reactor body by a series of studs that pass through a flange on the reactor head and a corresponding flange on the reactor body.

The reactor head may comprise an integrated head assembly in which a number of elements of the reactor structure may be consolidated into a single element. Included among the consolidated elements are a pressure vessel head, a cooling shroud, control rod drive mechanisms, a missile shield, a lifting rig, a hoist assembly, and a cable tray assembly.

The nuclear core may be comprised of a number of fuel assemblies, with the fuel assemblies containing fuel rods. The fuel rods may be formed of pellets of fissile material. The fuel assemblies may also include space for control rods. For example, the fuel assembly may provide a housing for a 17 x 17 grid of rods i.e. 289 total spaces. Of these 289 total spaces, 24 may be reserved for the control rods for the reactor, each of which may be formed of 24 control rodlets connected to a main arm, and one may be reserved for an instrumentation tube. The control rods are movable in and out of the core to provide control of the fission process undergone by the fuel, by absorbing neutrons released during nuclear fission. The reactor core may comprise between 100 - 300 fuel assemblies. Fully inserting the control rods may typically lead to a subcritical state in which the reactor is shutdown. Up to 100% of fuel assemblies in the reactor core may contain control rods.

Movement of the control rod may be moved by a control rod drive mechanism. The control rod drive mechanism may command and power actuators to lower and raise the control rods in and out of the fuel assembly, and to hold the position of the control rods relative to the core. The control rod drive mechanism rods may be able to rapidly insert the control rods to quickly shut down (i.e. scram) the reactor.

### Brief Description of the Drawings

Embodiments will now be described by way of example only, with reference to the Figures, in which:
Figure 1 shows a schematic perspective view of a PWR power plant;
Figure 2 shows a perspective view of an array of pressure-containing silos of the present invention;
Figure 3A-3E show a plan view of a number of arrangements of the pressure-containing silos of the present invention;
Figure 4 shows a perspective view of a modular unit of the present invention;
Figure 5 shows a perspective view of a domed head which caps a cylindrical release space of a pressure-containing silo of the present invention;
Figure 6 shows steps in an example construction sequence for assembling the modular units to form a silo; and
Figure 7 shows schematically a cross-section through an end piece for closing a non-opening end of a silo.

### Detailed Description

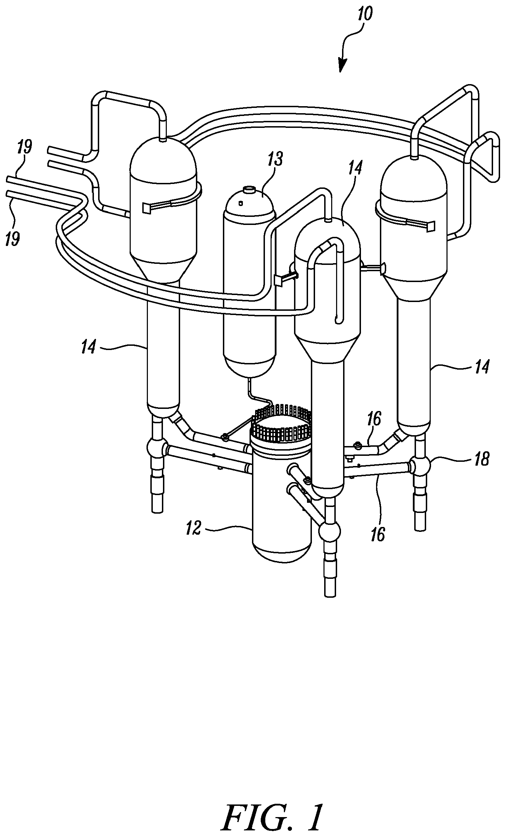

Figure 1 is a schematic diagram of a PWR nuclear power plant 10 having an output which may be in the range from 300 to 1000 MWe. An RPV 12 containing fuel assemblies is centrally located in the plant. Clustered around the RPV are three steam generators 14 connected to the RPV by pipework 16 of the pressurised water, primary coolant circuit. Coolant pumps 18 circulate pressurised water around the primary coolant circuit, taking heated water from the RPV to the steam generators, and cooled water from the steam generators to the RPV.

A pressurizer 13 maintains the water pressure in the primary coolant circuit at about 155 bar.

In the steam generators 14, heat exchangers transfer heat from the pressurised water to feed water circulating in pipework 19 of a secondary coolant circuit, thereby producing steam which is used to drive turbines which in turn drive an electricity-generator. The steam is condensed before returning to the steam generators.

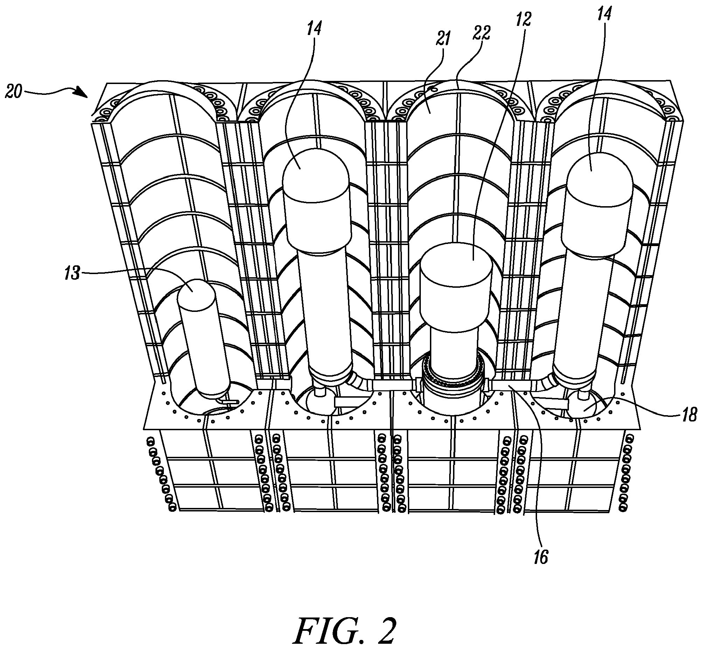

Figure 2 shows an array 20 of vertically extending, pressure-containing silos 21 for components of a similar power plant. Each silo is capped with a respective domed head 22 and delimits an interior, cylindrical release space, having a typical diameter of about 5 to 7 m. In the example power plant of Figure 2, an RPV 12, two steam generators 14 and a pressuriser 13 are located within the release spaces of respective silos and connected to one another by pipework 16 of the primary coolant circuit to transfer the pressurised coolant water therebetween. Neighbouring pressure-containing silos have aligned apertures in their walls through which the connecting pipework 16 extends. Coolant pumps 18 are also included on the primary circuit to drive the pressurised water around the primary coolant circuit.

In the event of a loss-of-coolant accident from one of the components 12, 13, 14, 18 or the pipework 16 of the primary circuit, pressurised coolant water is released into the release space of one of the silos. The released water forms steam which increases in pressure until it reaches an equilibrium level which inhibits further water release and steam formation. The water level in the RPV 12 drops during this release episode, but the pressure-containing silos 21 are configured such that, whichever silo receives the released water, the fuel assemblies within the RPV 12 remain fully covered by the coolant water over the entire episode. In particular, the cylindrical release spaces are relatively low in volume as they are approximately matched to the sizes of the components which they contain, and are also isolated from one another other such that the increasing pressure from the contained steam in a given release space is not communicated to the other release spaces. Relatively small components, such as the pressuriser 13 may not fully fill the release space of the silo 21 in which they are located. In this case, the remainder of the release space may be used to house additional equipment such as chemistry and volume control equipment, heat exchanger equipment, air conditioning equipment, and cooling water tanks.

The RPV 12 shown in Figure 2 is for a small modular reactor (SMR) with an output of between 300-1000 MWe requires a silo with a diameter of between 5-7 m. In the event of a loss-of-coolant accident the equilibrium pressure for the pressure-containing silos 21 is approximately 30-50 bar.

An advantage of the silo arrangement over conventional PWR containment structures is that in the event of a loss-of-coolant accident, equilibrium pressure is reached much more rapidly than in conventional PWR containment structures and thus less coolant water is lost from the primary circuit, such that rapid refilling of water into the RPV to maintain coverage of the nuclear fuel assemblies maybe unnecessary.

As shown in Figure 2, it is preferable that neighbouring pressure-containing silos 21 of the array 20 are in close contact such that the entire length of the connecting pipework 16 between the release spaces of the neighbouring silos is surrounded by the walls of the neighbouring pressure-containing silos. This close contact is facilitated by forming the silos with a prismatic outer surface. For example, the silos shown in Figure 2 have rectangular prismatic outer surfaces, but another option for close-packing the silos is to form them with hexagonal prismatic outer surfaces.

As also shown in Figure 2, the pipework 16 may have hot and cold legs which are arranged at spaced vertical heights with the silo walls having sufficient concrete ligaments between the apertures for the respective legs such that any hoop stress in the walls is kept below a safe predetermined level.

Other options are for the hot and cold legs of the pipework 16 to be arranged at the same vertical height with horizontally-spaced respective apertures, or to be arranged as coaxial, nested pipes. Having coaxial pipes for the respective legs advantageously reduces the number of apertures needed between neighbouring silos 21. When the silos are made of reinforced concrete (as discussed below), reducing the number of apertures advantageously reduces the need to reposition concrete reinforcement members.

Optionally, part of a boundary of the pressure-containing silo 21 containing the RPV 12 may comprise a heat exchanger configured to convey heat to an exterior of the silo. In the event of the loss-of-coolant accident in the RPV, the released steam condenses on the heat exchanger and runs back to the lowest part of the silo beneath the RPV. Thus, as water escapes the primary circuit, it fills the silo. A valve on the RPV can be set so that when the silo water pressure and the primary circuit water pressure are in a similar range, it opens, to equalise pressure and allow the water in the silo to flow back into the RPV. The silo bottom under the reactor vessel can be sized so that if the total water inventory of the primary circuit is emptied into its volume the reactor core will remain covered by water.

Another option, however, is for plural of the silos 21 to have respective such heat exchangers. In this case, the silos can be arranged to allow cross-flooding between the silos of the condensed steam in order that the water from the primary circuit can still run to the lowest part of the silo containing the RPV 12. Having more than one heat exchanger installed in different silos provides redundancy in case of damage or blockage to a heat exchanger.

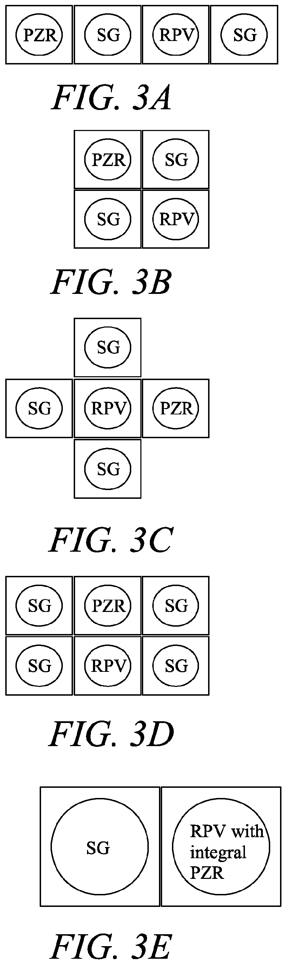

Figures 3A-3E show different possible close-packed arrangements of the pressure-containing silos 21 and the main components (i.e. RPV, steam generator SG, and pressurizer PZR) which they house. Figure 3A shows the linear arrangement of Figure 2. Figure 3B shows a 2 by 2 square layout with two diagonally disposed steam generators. Figure 3C shows a cross-shaped layout with three steam generators and a pressurizer surrounding a centrally positioned RPV. Figure 3D shows a 2 by 3 rectangular arrangement with four steam generators located at the corners of the rectangle. Figure 3E shows an arrangement which has only one steam generator, and the RPV and pressurizer (which may be integral with the RPV) are sized such that they are contained in the same silo.

Close-packed arrangements other than those shown in Figures 3A-3E are possible, for example if the silos 21 have non-rectangular (e.g. hexagonal prismatic) outer surfaces.

In other arrangements or more of the silos 21 may extend horizontally instead of vertically, and the components within those silos may be suitably adapted for a horizontal orientation.

The pressure-containing silos 21 shown in Figure 2 are identical in size, however it is possible to have arrangements wherein the silos are differently sized.

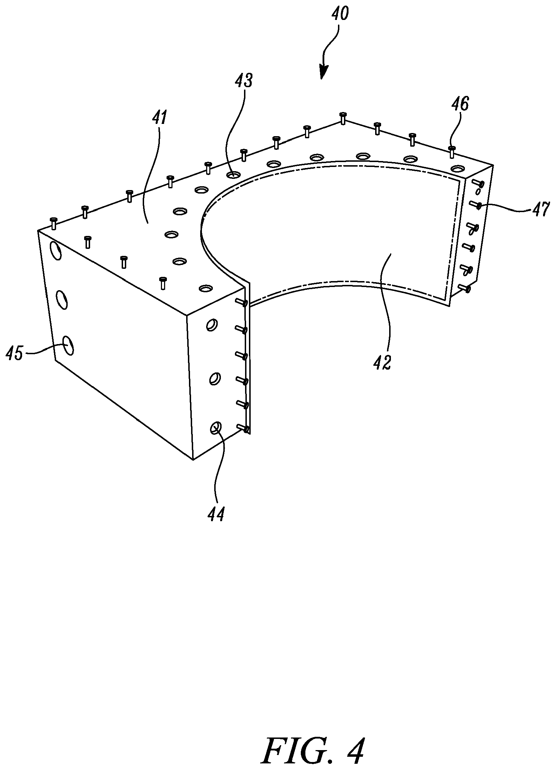

Each silo 21 is formed from plural, substantially identical, stacked and joined modular units. Figure 4 shows a perspective view of one such modular unit 40 comprising: (i) a concrete body 41, (ii) a metal (e.g. stainless steel) liner 42 which lines a surface of the concrete body which, when the units are stacked and joined, is sealed edge-to-edge with the metal liners of neighbouring units to form an inward-facing, pressure-containing skin surrounding the release space, and (iii) plural conduits 43, 44, 45 which, when the units are stacked, align with the conduits of neighbouring units to receive elongate tensioning members for post-stressing the concrete of the bodies. Extended reinforcement (i.e. re-bar) 46, 47 projects from the surface of the concrete body of the modular unit. The extended reinforcements of neighbouring modular units are offset when the units are stacked so that they do not mechanically interfere with each other. When the units are joined together by grouting, the extended reinforcement thus fixes the thickness of the grouted joint and can also help to strengthen the joint. The modular unit shown in Figure 4 extends circumferentially around the cylindrical release space of its silo by 180° and forms a rectangular prismatic outer surface of the silo. A variant unit also compatible with a rectangular prismatic outer surface has a 90° circumferential extent. If the silo has a hexagonal prismatic outer surface of the silo, the circumferential extent of the respective units can be 60°, 120° or 180°.

The modular units 40 can be manufactured by a moulding process. For example, the units can be cast by pouring concrete into a mould, followed by setting and release. Conveniently, the metal liners can be cast-in as part of such a moulding process. The moulding process facilitates the manufacture of the modular units on standardized production lines either on site or off site in a controlled factory setting.

Optional features may be included in the modular units 40. Examples are: alignment fixtures (e.g. cones and slots) which engage with corresponding alignment fixtures of neighbouring units to ensure that the units, when stacked, are correctly located relative to each other; alignment markings which align to corresponding alignment markings of neighbouring units to ensure that the units, when stacked, are correctly located relative to each other; sensors which function during the construction of the silos 21 from the units to monitor the handling of the units; sensors which monitor the silos in normal service and in accident scenarios; integral retention formations to shutter the grouting inserted between faces of neighbouring modular units when the units are stacked; integrated heat exchangers for cooling the release space defined by the silo which contains the RPV 12; and apertures in selected modular units through which pipework 16 extends.

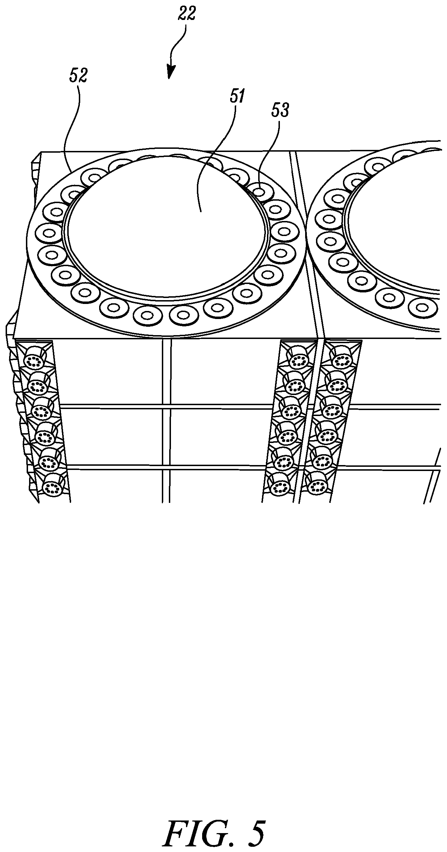

Figure 5 shows a perspective view of one of the domed heads 22 of Figure 2. The head has a dome portion 51 in the form of a depressed hemisphere which caps the cylindrical release space of the silo, and a surrounding bolting flange 52. The head, which may be formed of stainless steel, stainless steel-coated carbon steel, or even just suitably painted carbon steel, may have diameter of about 6 m and a thickness of about 60 mm. Conveniently, the head can be secured to the silo by bolting the ends of elongate tensioning members 53 which extend parallel to the cylinder axis through conduits 43 to the bolting flange 52. In other arrangements the domed head may be held in place by a bolting joint or by hinged pressure doors. The head is configured to resist anticipated pressure and temperature loads, without degrading during service.

Rather than securing the heads 22 to the silos 21 by bolting their flanges 52 to the ends of elongate tensioning members 53, other forms of closure can be adopted, such as forming the heads as hinged pressure doors.

In some arrangements, a component which is contained within a silo 21 can be fixed to the domed head 22 to allow convenient insertion and removal of the component from the release space of the pressure-containing silo. If a silo contains plural components, then the components can be fixed together to enable their combined insertion or removal in a single operation. For example, the reactor coolant pumps may be located beneath a steam generator, and therefore one potential method of maintenance of the coolant pumps is to unbolt the steam generator and lift the generator and reactor coolant pumps out of the reactor as one unit.

The bottom end of each silo 21 can be sealed using a concrete plug. The elongate tensioning members may wrap under or through the concrete plug to hold it in place.

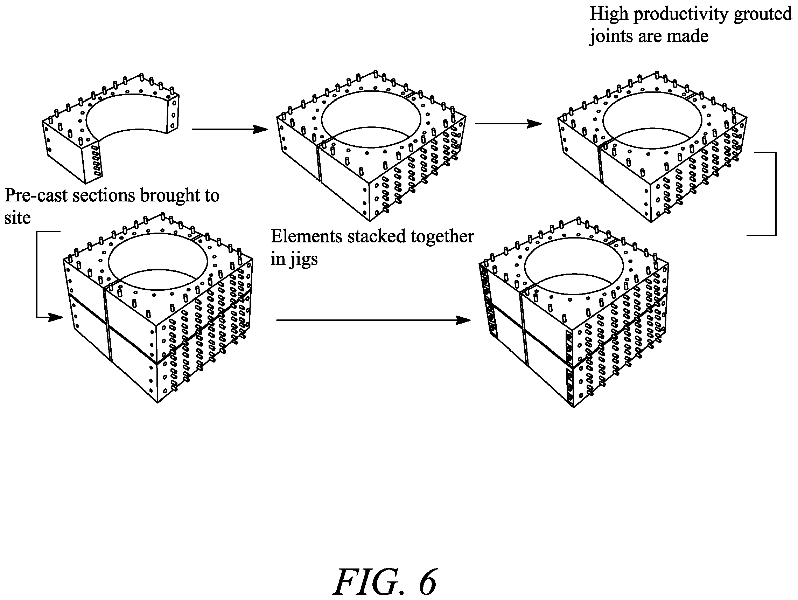

Figure 6 shows steps in an example construction sequence for assembling the modular units 40 to form a silo 21.

The modular units 40 are firstly transported from a manufacturing location to a reactor site. The modular units can be sized so that they are transportable by road, rail, water or air. This allows the units to be manufactured at a location or locations away from the reactor site and then transported to a reactor site for assembly. Manufacture of modular units at more than one location allows standardized modular units to be manufactured in parallel which correspondingly reduces the overall construction times. Alternatively, the modular units may be manufactured at the reactor site.

The pre-cast units may then be joined together by grouting them together using concrete. In this example the exposed re-bar (i.e. extended reinforcement 47) is configured so that when two pieces are placed in close proximity these re-bar overlap, whereby when the concrete grouting is set the two units are strongly bound together by the re-bar.

The modular pre-cast units may be placed directly into their final positions and then fixed in place. Pre-cast units may be lifted by crane into their final positions. However, it can be more efficient to assemble two or four units together in a dedicated jig, where they can be precisely aligned, their liners 42 joined, the units grouted together and the completed assembly inspected, before the assembly is craned into position and bonded (i.e. by further welding and grouting) to other previously installed assemblies to build up the silo. Conveniently, the liners 42 are welded together edge-to-edge before the grouting. In this example, only two weld types (horizontal and vertical) need to be managed on site, which facilitates automated welding.

Once a silo is constructed, post tensioning cables (i.e. elongate tensioning members) are inserted within the conduits 43, 44, 45, before being tensioned. These post-tensioned cables apply a large compressive load on the concrete of the units so that even when the silo is fully stressed in an accident scenario, the concrete remains under a compressive load.

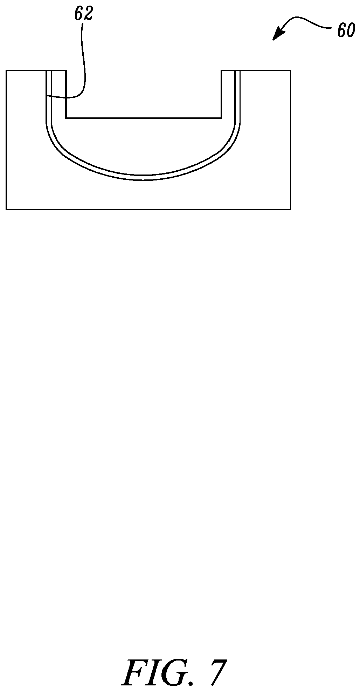

According to possible variants to the approach described above:
- The steel liner 42 may incorporate features such as grooves and overlaps which allow it to be sealed to neighbouring liners without welding the liners together. These methods may involve methods such as elastomeric seals and infusing the joint with thermoplastic resins or brazing materials.
- The steel liners 42 may be joined together by means of a bolting flange or other similar mechanical joint.
- The units 40 may be joined without the use of grouting. For example, mechanical interlocks, such as grooves and crenulations, may be used to hold the units together, these joints being kept under compressive load in-service by the post tensioning cables and may include gaskets.
- An end piece 60 for closing the non-opening end of the silo may be provided, as shown schematically in Figure 7. The end piece can have one on more turn-around passages 62 through which the post tensioning cables can be inserted. This can then avoid a need for a cable stressing gallery at that end of the silo.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A pressure-containing silo (21) for one or more components (12, 13, 14, 18) on a primary coolant circuit of a nuclear power plant (10) having a nuclear reactor containing fuel assemblies which are cooled by pressurised coolant circulating around the primary coolant circuit, the silo (21) defining a release space which, in the event of a loss-of-coolant accident releasing the pressurised coolant from the one or more components (12, 13, 14, 18) contained therein, receives and contains the released coolant;
wherein the silo (21) is formed from plural, substantially identical, stacked and joined modular units (40), each modular unit (40) having:
a concrete body (41),
a metal liner (42) which lines a surface of the concrete body (41) and which is sealed edge-to-edge with the metal liners (42) of neighbouring units (40) to form an inward-facing, pressure-containing skin surrounding the release space, and
plural conduits (43, 44, 45) which are aligned with the conduits (43, 44, 45) of neighbouring units (40) and comprise elongate tensioning members for post-stressing the concrete bodies (41);
wherein the conduits of each modular unit extend in three orthogonal directions, such that the elongate tensioning members extend in three orthogonal direction (43, 44, 45) in the aligned conduits.

2. The pressure-containing silo (21) according to claim 1, wherein each modular unit (40) further has alignment fixtures which engage with corresponding alignment fixtures of neighbouring units (40) to ensure that the units (40) are correctly located relative to each other.

3. The pressure-containing silo (21) according to claim 1 or 2, wherein each modular unit (40) further has alignment markings which align to corresponding alignment markings of neighbouring units (40) to ensure that the units (40) are correctly located relative to each other.

4. The pressure-containing silo (21) according to any one of the previous claims, wherein the release space is a cylindrical space.

5. The pressure-containing silo (21) according to claim 4, wherein two of the orthogonal directions are perpendicular to the cylinder axis and the third orthogonal direction is parallel to the cylinder axis.

6. The pressure-containing silo (21) according to claim 4 or 5, wherein the cylindrical space extends vertically, and is capped at its upper end by a domed head (22).

7. The pressure-containing silo (21) according to claim 6, as dependent on claim 5, wherein the domed head (22) is secured to the silo (21) by bolting at the ends of the elongate tensioning members which extend parallel to the cylinder axis.

8. The pressure-containing silo (21) according to any one of claims 4 to 7 wherein each of the modular units (40) extends circumferentially around the cylindrical release space by at least 60°.

9. The pressure-containing silo (21) according to any one of the previous claims, wherein the metal liners (42) are sealed edge-to-edge by welding, brazing, gaskets and/or mechanical fasteners.

10. The pressure-containing silo (21) according to any one of the previous claims, wherein grouting is inserted between faces of neighbouring modular units (40).

11. The pressure-containing silo (21) according to claim 10, wherein the modular units (40) have integral retention formations to shutter the inserted grouting.

12. The pressure-containing silo according to any one of the previous claims wherein the pressure containing silo is for containing one or more components on the primary coolant circuit of a PWR nuclear power plant.

13. An array of plural of the pressure-containing silos according to claim 12, each silo (21) being for containing respective components (12, 13, 14, 18) on the primary coolant circuit of the PWR nuclear power plant (10), wherein each silo (21) further comprises one or more apertures formed in selected of the modular units (40) and wherein the apertures of neighbouring silos (21) are aligned for connecting pipework (16) of the primary coolant transfer circuit to extend between components (12, 13, 14, 18) in neighbouring silos (21) through the aligned apertures to transfer the pressurised coolant water therebetween.

14. The array (20) of 13 wherein the neighbouring silos (21) are in close contact such that the entire length of a passage between the release spaces of neighbouring silos (21) through the aligned apertures is surrounded by the concrete bodies (41) of the selected modular units (40) of those neighbouring silos (21).

15. A PWR nuclear power plant (10) having a reactor pressure vessel (12) containing fuel assemblies which are cooled by pressurised coolant water circulating around a primary coolant circuit, components (12, 13, 14, 18) of the power plant (10) on the primary coolant circuit being contained in respective silos (21) of the array (20) of claim 13 or 14.

16. The PWR nuclear power plant (10) of claim 15 wherein:
a first one of the silos (21) contains the reactor pressure vessel (12) of the PWR nuclear power plant (10);
a second one of the silos (21) contains a steam generator (14) of the PWR nuclear power plant (10), in use the steam generator (14) receiving pressurised coolant water from the reactor pressure vessel (12), extracting heat therefrom to generate steam for use in power generation, and returning the pressurised coolant water to the reactor pressure vessel (12);
the reactor pressure vessel (12) is confined by and positioned within the first silo (21) such that, in the event of the loss-of-coolant accident of the reactor pressure vessel (12), nuclear fuel elements within the reactor pressure vessel (12) remain fully covered by the coolant water when the steam pressure within the release space of the first silo (21) reaches an equilibrium level limiting further steam formation;
the steam generator (14) is confined by the second silo (21) such that, in the event of the loss-of-coolant accident of the steam generator (14), the nuclear fuel elements within the reactor pressure vessel (12) remain fully covered by the coolant water when the steam pressure within the release space of the second silo (21) reaches an equilibrium level limiting further steam formation; and
the release spaces of the first and second silos (21) are isolated from each other such that the increasing pressure from the contained steam in either release space is not communicated to the other release space.

17. A method for the manufacture of a pressure-containing silo (21) for one or more components (12, 13, 14, 18) of a primary coolant circuit of a nuclear power plant (10), the nuclear power plant (10) having a nuclear reactor containing fuel assemblies which are cooled by pressurised coolant circulating around the primary coolant circuit, wherein the silo (21) defining a release space which, in the event of a loss-of-coolant accident releasing the pressurised coolant from the one or more components (12, 13, 14, 18) is contained therein, the method comprising:
providing a plurality of stacked and joined modular units (40), each modular unit (40) having:
a concrete body (41), comprising plural conduits to align with conduits (43, 44, 45) of neighbouring units (40), and
a metal liner (42) which lines a surface of the concrete body (41);
stacking the modular units (40) with the metal liners (42) of neighbouring units (40) to form an inward-facing, pressure-containing skin surrounding the release space, and with the conduits (43, 44, 45) of neighbouring units (40) aligned;
joining the units (40); and
inserting tensioning members into the conduits (43, 44, 45) of the concrete bodies to apply a post stressing load to the concrete bodies (41) of the modular units (40);
wherein conduits (43, 44, 45) of each modular unit (40) extend in three orthogonal directions, such that the elongate tensioning members extend in three orthogonal directions (43, 44, 45) in the aligned conduits.

18. The method according to claim 17, wherein joining the units (40) comprises joining the metal liners (42) edge-to-edge by welding, brazing, gaskets and/or mechanical fasteners.

19. The method according to claim 17 or 18 wherein joining the units (40) comprises inserting grouting between faces of neighbouring modular units (40) when the units (40) are stacked.

## Patentansprüche

1. Druckhaltiger Silo (21) für eine oder mehrere Komponenten (12, 13, 14, 18) in einem Primärkühlkreislauf eines Kernkraftwerks (10), das einen Kernreaktor aufweist, der Brennstoffanordnungen enthält, die durch unter Druck stehendes Kühlmittel gekühlt werden, das im Primärkühlkreislauf zirkuliert, wobei der Silo (21) einen Freisetzungsraum definiert, der, im Fall eines Kühlmittelverlustunfalls, bei dem das unter Druck stehende Kühlmittel aus der einen oder den mehreren Komponenten (12, 13, 14, 18), die darin enthalten sind, freigesetzt wird, das freigesetzte Kühlmittel aufnimmt und enthält;
wobei der Silo (21) aus mehreren, im Wesentlichen identischen, gestapelten und verbundenen modularen Einheiten (40) ausgebildet ist, wobei jede modulare Einheit (40) Folgendes aufweist:
einen Betonkörper (41),
eine Metallauskleidung (42), die eine Oberfläche des Betonkörpers (41) auskleidet, und die Kante an Kante mit den Metallauskleidungen (42) der benachbarten Einheiten (40) dichtend verbunden ist, um eine nach innen gewandte druckhaltige Beschichtung zu bilden, die den Freisetzungsraum umgibt, und
mehrere Leitungen (43, 44, 45), die mit den Leitungen (43, 44, 45) der benachbarten Einheiten (40) fluchtend ausgerichtet sind und längliche Spannelemente zum Nachspannen der Betonkörper (41) umfassen;
wobei sich die Leitungen jeder modularen Einheit in drei orthogonale Richtungen erstrecken, sodass sich die länglichen Spannelemente in drei orthogonale Richtungen (43, 44, 45) in den fluchtend ausgerichteten Leitungen erstrecken.

2. Druckhaltiger Silo (21) nach Anspruch 1, wobei jede modulare Einheit (40) ferner Ausrichtungsbefestigungen umfasst, die in die entsprechenden Ausrichtungsbefestigungen von benachbarten Einheiten (40) eingreifen, um sicherzustellen, dass die Einheiten (40) relativ zueinander korrekt positioniert sind.

3. Druckhaltiger Silo (21) nach Anspruch 1 oder 2, wobei jede modulare Einheit (40) ferner Ausrichtungsmarkierungen aufweist, die mit entsprechenden Ausrichtungsmarkierungen von benachbarten Einheiten (40) ausgerichtet sind, um sicherzustellen, dass die Einheiten (40) relativ zueinander korrekt positioniert sind.

4. Druckhaltiger Silo (21) nach einem der vorangegangenen Ansprüche, wobei der Freisetzungsraum ein zylindrischer Raum ist.

5. Druckhaltiger Silo (21) nach Anspruch 4, wobei zwei der orthogonalen Richtungen lotrecht zu der Zylinderachse sind, und die dritte orthogonale Richtung parallel zur Zylinderachse ist.

6. Druckhaltiger Silo (21) nach Anspruch 4 oder 5, wobei sich der zylindrische Raum vertikal erstreckt und an dessen oberen Ende durch einen kuppelförmigen Kopf (22) verkappt ist.

7. Druckhaltiger Silo (21) nach Anspruch 6, in Abhängigkeit von Anspruch 5, wobei der kuppelförmige Kopf (22) durch Bolzen an den Enden der länglichen Spannelemente, die sich parallel zur Zylinderachse erstrecken, an dem Silo (21) befestigt ist.

8. Druckhaltiger Silo (21) nach einem der Ansprüche 4 bis 7, wobei sich jede der modularen Einheiten (40) rund um den Umfang des zylindrischen Freisetzungsraums um zumindest 60° erstreckt.

9. Druckhaltiger Silo (21) nach einem der vorangegangenen Ansprüche, wobei die Metallauskleidungen (42) von Kante zu Kante durch Schweißen, Hartlöten, Dichtung und/oder mechanische Befestigungselemente dichtend verbunden sind.

10. Druckhaltiger Silo (21) nach einem der vorangegangenen Ansprüche, wobei eine Vergussmasse zwischen Flächen von benachbarten modularen Einheiten (40) eingefügt ist.

11. Druckhaltiger Silo (21) nach Anspruch 10, wobei die modularen Einheiten (40) einstückig ausgebildete Rückhalteausbildungen aufweisen, um die eingefügte Vergussmasse zu verschließen.

12. Druckhaltiger Silo nach einem der vorangegangenen Ansprüche, wobei der druckhaltige Silo zum Enthalten einer oder mehrerer Komponenten auf dem Primärkühlkreislauf des PWR-Kernkraftwerks dient.

13. Druckhaltiger Silo nach Anspruch 12, wobei jeder Silo (21) zum Enthalten entsprechender Komponenten (12, 13, 14, 18) in dem Primärkühlkreislauf des PWR-Kernkraftwerks (10) dient, wobei jeder Silo (21) ferner eine oder mehrere Öffnungen umfasst, die in ausgewählten der modularen Einheiten (40) ausgebildet sind und wobei die Öffnungen von benachbarten Silos (21) für Verbindungsrohre (16) des Primärkühlkreislaufs fluchtend ausgerichtet sind, damit sich diese zwischen Komponenten (12, 13, 14, 18) in benachbarten Silos (21) durch die ausgerichteten Öffnungen erstrecken, um das unter Druck stehende Kühlmittelwasser dazwischen hindurchzuleiten.

14. Anordnung (20) nach Anspruch 13, wobei die benachbarten Silos (21) in engem Kontakt stehen, sodass die gesamte Länge eines Durchgangs zwischen den Freisetzungsräumen von benachbarten Silos (21) durch die ausgerichteten Öffnungen durch die Betonkörper (41) der ausgewählten modularen Einheiten (40) jener benachbarter Silos (21) umgeben ist.

15. PWR-Kernkraftwerk (10), das einen Reaktordruckbehälter (12) aufweist, der Brennstoffanordnungen enthält, die durch unter Druck stehendes Kühlmittel gekühlt werden, das in einem Primärkühlzyklus zirkuliert, wobei Komponenten (12, 13, 14, 18) des Kraftwerks (10) in dem Primärkühlzyklus in entsprechenden Silos (21) einer Anordnung (20) nach Anspruch 13 oder 14 enthalten sind.

16. PWR-Kernkraftwerk (10) nach Anspruch 15, wobei:
ein erster der Silos (21) den Reaktordruckbehälter (12) des PWR-Kernkraftwerks (10) enthält;
ein zweiter der Silos (21) einen Dampfgenerator (14) des PWR-Kernkraftwerks (10) enthält, wobei der Dampfgenerator (14) im Betrieb unter Druck stehendes Kühlmittelwasser von dem Reaktordruckbehälter (12) erhält, Wärme daraus extrahiert, um Dampf zur Verwendung in der Stromerzeugung zu erzeugen, und das unter Druck stehende Kühlmittelwasser in den Reaktordruckbehälter (12) rückführt;
der Reaktordruckbehälter (12) durch den ersten Silo (21) begrenzt und so darin positioniert ist, dass, im Fall eines Kühlmittelverlustunfalls des Reaktordruckbehälters (12), Kernbrennstoffelemente innerhalb des Reaktordruckbehälters (12) vollständig von dem Kühlmittelwasser bedeckt bleiben, wenn der Dampfdruck innerhalb des Freisetzungsraums des ersten Silos (21) einen Ausgleichspegel erreicht, der die weitere Dampfbildung einschränkt;
der Dampfgenerator (14) durch den zweiten Silo (21) so begrenzt wird, dass, im Fall des Kühlmittelverlustunfalls des Dampfgenerators (14), die Kernbrennstoffelemente innerhalb des Reaktordruckbehälters (12) vollständig von dem Kühlmittelwasser bedeckt bleiben, wenn der Dampfdruck innerhalb des Freisetzungsraums des zweiten Silos (21) einen Ausgleichspegel erreicht, der die weitere Dampfbildung einschränkt; und
die Freisetzungsräume des ersten und des zweiten Silos (21) so voneinander isoliert sind, dass der ansteigende Druck durch den enthaltenen Dampf in einem der beiden Freisetzungsräume nicht an den anderen Freisetzungsraum übertragen wird.

17. Verfahren zur Herstellung eines druckhaltigen Silos (21) für eine oder mehrere Komponenten (12, 13, 14, 18) eines Primärkühlkreislaufs eines Kernkraftwerks (10), wobei das Kernkraftwerk (10) einen Kernreaktor aufweist, der Brennstoffanordnungen enthält, die durch unter Druck stehendes Kühlmittel gekühlt werden, das im Primärkühlkreislauf zirkuliert, wobei der Silo (21) einen Freisetzungsraum definiert, der, im Fall eines Kühlmittelverlustunfalls das unter Druck stehende Kühlmittel aus der einen oder den mehreren Komponenten (12, 13, 14 18), die darin enthalten sind, freisetzt, wobei das Verfahren Folgendes umfasst:
Bereitstellen einer Vielzahl von gestapelten und verbundenen modularen Einheiten (40), wobei jede modulare Einheit (40) Folgendes aufweist:
einen Betonkörper (41), der mehrere Leitungen umfasst, um diese mit Leitungen (43, 44, 45) von benachbarten Einheiten (40) fluchtend auszurichten, und
eine Metallauskleidung (42), die eine Oberfläche des Betonkörpers (41) auskleidet;
Stapeln der modularen Einheiten (40) mit den Metallauskleidungen (42) von benachbarten Einheiten (40), um eine nach innen gewandte druckhaltige Beschichtung zu bilden, die den Freisetzungsraum umgibt, und wobei die Leitungen (43, 44, 45) von benachbarten (40) Einheiten miteinander fluchtend ausgerichtet sind;
Verbinden der Einheiten (40); und
Einführen von Spannelementen in die Leitungen (43, 44, 45) der Betonkörper, um eine Nachspannbelastung auf die Betonkörper (41) der modularen Einheiten (40) anzuwenden;
wobei sich Leitungen (43, 44, 45) jeder modularen Einheit (40) in drei orthogonale Richtungen erstrecken, sodass sich die länglichen Spannelemente in drei orthogonale Richtungen (43, 44, 45) in den ausgerichteten Leitungen erstrecken.

18. Verfahren nach Anspruch 17, wobei das Verbinden der Einheiten (40) das Verbinden der Metallauskleidungen (42) von Kante zu Kante durch Schweißen, Hartlöten, Dichtung und/oder mechanische Befestigungselemente umfasst.

19. Verfahren nach Anspruch 17 oder 18, wobei das Verbinden der Einheiten (40) das Einführen von Vergussmasse zwischen Oberflächen von benachbarten modularen Einheiten (40) umfasst, wenn die Einheiten (40) gestapelt sind.

## Revendications

1. Silo sous-pression (21) pour un ou plusieurs composants (12, 13, 14, 18) sur un circuit de fluide de refroidissement primaire d'une centrale nucléaire (10) présentant un réacteur nucléaire contenant des ensembles de combustible qui sont refroidis par un fluide de refroidissement sous pression circulant autour du circuit de fluide de refroidissement primaire, le silo (21) définissant un espace de libération qui, en cas d'accident de perte de fluide de refroidissement libérant le fluide de refroidissement sous pression depuis les un ou plusieurs composants (12, 13, 14, 18) contenus en son sein, reçoit et contient le fluide de refroidissement libéré ;
dans lequel le silo (21) est formé de plusieurs unités modulaires (40), sensiblement identiques, empilées et assemblées, chaque unité modulaire (40) présentant :
un corps en béton (41),
un revêtement métallique (42) qui recouvre une surface du corps en béton (41) et qui est scellé bord à bord avec les revêtements métalliques (42) des unités voisines (40) pour former une peau sous-pression orientée vers l'intérieur entourant l'espace de libération, et
une pluralité de conduits (43, 44, 45) qui sont alignés avec les conduits (43, 44, 45) d'unités voisines (40) et comprennent des éléments de tension allongés pour une post-contrainte des corps en béton (41) ;
dans lequel les conduits de chaque unité modulaire s'étendent dans trois directions orthogonales, de telle sorte que les éléments de tension allongés s'étendent dans trois directions orthogonales (43, 44, 45) dans les conduits alignés.

2. Silo sous-pression (21) selon la revendication 1, dans lequel chaque unité modulaire (40) présente en outre des accessoires d'alignement qui viennent en prise avec des accessoires d'alignement correspondants d'unités voisines (40) pour assurer que les unités (40) soient positionnées correctement les unes par rapport aux autres.

3. Silo sous-pression (21) selon la revendication 1 ou 2, dans lequel chaque unité modulaire (40) présente en outre des marquages d'alignement qui s'alignent sur des marquages d'alignement correspondants d'unités voisines (40) pour assurer que les unités (40) soient positionnées correctement les unes par rapport aux autres.

4. Silo sous-pression (21) selon l'une quelconque des revendications précédentes, dans lequel l'espace de libération est un espace cylindrique.

5. Silo sous-pression (21) selon la revendication 4, dans lequel deux des directions orthogonales sont perpendiculaires à l'axe de cylindre et la troisième direction orthogonale est parallèle à l'axe de cylindre.

6. Silo sous-pression (21) selon la revendication 4 ou 5, dans lequel l'espace cylindrique s'étend verticalement, et est coiffé à son extrémité supérieure par une tête bombée (22).

7. Silo sous-pression (21) selon la revendication 6, lorsqu'elle dépend de la revendication 5,
dans lequel la tête bombée (22) est fixée au silo (21) par boulonnage aux extrémités des éléments de tension allongés qui s'étendent parallèlement à l'axe de cylindre.

8. Silo sous-pression (21) selon l'une quelconque des revendications 4 à 7, dans lequel chacune des unités modulaires (40) s'étend circonférentiellement autour de l'espace de libération cylindrique sur au moins 60°.

9. Silo sous-pression (21) selon l'une quelconque des revendications précédentes, dans lequel les revêtements métalliques (42) sont scellées bord à bord par soudage, brasage, des joints et/ou fixations mécaniques.

10. Silo sous-pression (21) selon l'une quelconque des revendications précédentes, dans lequel le jointoiement est inséré entre des faces d'unités modulaires voisines (40).

11. Silo sous-pression (21) selon la revendication 10, dans lequel les unités modulaires (40) présentent des formations de retenue d'un seul tenant pour obturer le jointoiement inséré.

12. Silo sous-pression selon l'une quelconque des revendications précédentes, dans lequel le silo sous-pression est destiné à contenir un ou plusieurs composants sur le circuit de fluide de refroidissement primaire d'une centrale nucléaire PWR.

13. Réseau de plusieurs des silos sous-pression selon la revendication 12, chaque silo (21) étant destiné à contenir des composants respectifs (12, 13, 14, 18) sur le circuit de fluide de refroidissement primaire de la centrale nucléaire PWR (10), dans lequel chaque silo (21) comprend en outre une ou plusieurs ouvertures formées dans des unités modulaires choisies (40) et dans lequel les ouvertures de silos voisins (21) sont alignées pour raccorder une tuyauterie (16) du circuit de transfert de fluide de refroidissement primaire pour s'étendre entre des composants (12, 13, 14, 18) dans des silos voisins (21) à travers les ouvertures alignées afin de transférer l'eau de refroidissement sous pression entre eux.

14. Réseau (20) selon la revendication 13 dans lequel les silos voisins (21) sont en contact étroit de telle sorte que toute la longueur d'un passage entre les espaces de libération de silos voisins (21) à travers les ouvertures alignées est entourée par les corps en béton (41) des unités modulaires choisies (40) de ces silos voisins (21).

15. Centrale nucléaire PWR (10) présentant une cuve de réacteur sous pression (12) contenant des ensembles de combustible qui sont refroidis par de l'eau de refroidissement sous pression circulant autour d'un circuit de fluide de refroidissement primaire, des composants (12, 13, 14, 18) de la centrale (10) sur le circuit de fluide de refroidissement primaire étant contenus dans des silos respectifs (21) du réseau (20) de la revendication 13 ou 14.

16. Centrale nucléaire PWR (10) selon la revendication 15, dans laquelle :
un premier des silos (21) contient la cuve de réacteur sous pression (12) de la centrale nucléaire PWR (10) ;
un second des silos (21) contient un générateur de vapeur (14) de la centrale nucléaire PWR (10), le générateur de vapeur (14) recevant en utilisation de l'eau de refroidissement sous pression à partir de la cuve de réacteur sous pression (12), en extrayant de la chaleur pour générer de la vapeur à utiliser dans la production d'énergie, et renvoyant l'eau de refroidissement sous pression à la cuve de réacteur sous pression (12) ;
la cuve de réacteur sous pression (12) est confinée par et positionnée à l'intérieur du premier silo (21) de telle sorte qu'en cas d'accident de perte de fluide de refroidissement de la cuve de réacteur sous pression (12), des éléments de combustible nucléaire à l'intérieur de la cuve de réacteur sous pression (12) restent entièrement recouverts par l'eau de refroidissement lorsque la pression de vapeur à l'intérieur de l'espace de libération du premier silo (21) atteint un niveau d'équilibre limitant une formation de vapeur supplémentaire ;
le générateur de vapeur (14) est confiné par le second silo (21) de telle sorte qu'en cas d'accident de perte de fluide de refroidissement du générateur de vapeur (14), les éléments de combustible nucléaire à l'intérieur de la cuve de réacteur sous pression (12) restent entièrement recouverts par l'eau de refroidissement lorsque la pression de vapeur à l'intérieur de l'espace de libération du second silo (21) atteint un niveau d'équilibre limitant une formation de vapeur supplémentaire ; et
les espaces de libération des premier et second silos (21) sont isolés l'un de l'autre de sorte que la pression croissante de la vapeur contenue dans l'un ou l'autre espace de libération ne soit pas communiquée à l'autre espace de libération.

17. Procédé de fabrication d'un silo sous pression (21) pour un ou plusieurs composants (12, 13, 14, 18) d'un circuit de fluide de refroidissement primaire d'une centrale nucléaire (10), la centrale nucléaire (10) présentant un réacteur nucléaire contenant des ensembles de combustible qui sont refroidis par un fluide de refroidissement sous pression circulant autour du circuit de fluide de refroidissement primaire, dans lequel le silo (21) définit un espace de libération qui, en cas d'accident de perte de fluide de refroidissement, libère le fluide de refroidissement sous pression depuis les un ou plusieurs composants (12, 13, 14, 18), est contenu en son sein, le procédé comprenant les étapes consistant à :
fournir une pluralité d'unités modulaires empilées et jointes (40), chaque unité modulaire (40) présentant :
un corps en béton (41), comprenant plusieurs conduits destinés à s'aligner avec des conduits (43, 44, 45) d'unités voisines (40), et
un revêtement métallique (42) qui recouvre une surface du corps en béton (41) ;
empiler les unités modulaires (40) avec les revêtements métalliques (42) d'unités voisines (40) pour former une peau sous pression, orientée vers l'intérieur, entourant l'espace de libération, et avec les conduits (43, 44, 45) d'unités voisines (40) alignés ;
joindre les unités (40) ; et
insérer des éléments de tension dans les conduits (43, 44, 45) des corps en béton pour appliquer une charge de post-contrainte aux corps en béton (41) des unités modulaires (40) ;
dans lequel des conduits (43, 44, 45) de chaque unité modulaire (40) s'étendent dans trois directions orthogonales, de telle sorte que les éléments de tension allongés s'étendent dans trois directions orthogonales (43, 44, 45) dans les conduits alignés.

18. Procédé selon la revendication 17, dans lequel la jonction des unités (40) comprend une jonction des revêtements métalliques (42) bord à bord par soudage, brasage, des joints et/ou fixations mécaniques.

19. Procédé selon la revendication 17 ou 18, dans lequel la jonction des unités (40) comprend l'insertion de jointoiement entre des faces d'unités modulaires voisines (40) lorsque les unités (40) sont empilées.
